# EUROPÄISCHE PATENTSCHRIFT

(11) **EP 3 453 097 B1**
(45) Veröffentlichungstag und Bekanntmachung des Hinweises auf die Patenterteilung: **09.09.2026**
(21) Anmeldenummer: 17719551.8
(22) Anmeldetag: 21.04.2017
(51) Int. Cl.: H02J 7/54

(54) **AKKUMULATORANORDNUNG MIT EINER VERBESSERTEN SYMMETRIERUNG**
RECHARGEABLE BATTERY ARRANGEMENT WITH IMPROVED SYMMETRIZATION
AGENCEMENT D'ACCUMULATEURS À SYMÉTRIE AMÉLIORÉE

(30) Priorität: 02.05.2016 DE 102016207555
(43) Veröffentlichungstag der Anmeldung: 13.03.2019
(73) Patentinhaber: Bayerische Motoren Werke Aktiengesellschaft, 80809 München (DE)
(72) Erfinder: ROTHE, Steffen, 80807 München (DE)
(86) Internationale Anmeldenummer: PCT/EP2017/059454
(87) Internationale Veröffentlichungsnummer: WO 2017/190964

(56) Entgegenhaltungen:
- DE-A1- 102009 045 519
- DE-A1- 102011 079 253
- DE-A1- 102012 201 359
- JP-A- 2010 063 264
- US-A- 5 747 964
- PAUL HOROWITZ, WINFIELD HILL: "The Art of Electronics", 1989, THE PRESS SYNDICATE OF THE UNIVERSITY OF CAMBRIDGE, United Kingdom, ISBN: 0521370957, article "Feedback and operational amplifiers", pages: 175 - 179, XP002771245

## Beschreibung

Die vorliegende Erfindung betrifft eine Akkumulatoranordnung mit einer verbesserten Symmetrierung der Spannung der in Serie geschalteter Akkumulatorzellen.

Die Kapazität einer Akkumulatoranordnung mit einer Mehrzahl in Serie geschalteter Zellen wird im wesentlichen durch das Verhalten der schlechtesten Zelle bestimmt. Mittels einer Symmetrierung kann der Ladezustand der einzelnen Zellen in einem Strang aus der Mehrzahl in Serie geschalteter Akkumulatorzellen ausgeglichen werden. Dadurch kann die praktisch verfügbare Kapazität der Akkumulatoranordnung erhöht werden.

Die DE 10 2013 021 535 A1 offenbart eine induktive Symmetrierschaltung.

Die DE 10 2012 201 359 A1 und die DE 10 2009 045 519 A1 offenbaren einen Spannungsteiler, wobei die Widerstände des Spannungsteilers Batterieelementen parallel geschaltet sind. Die Schaltung umfasst zumindest ein Vergleichsmittel zum Vergleichen des ersten elektrischen Potenzials mit einem zweiten elektrischen Potenzial, das an dem positiven Pol des ersten der benachbarten Batterieelemente und an den negativen Pol des zweiten der benachbarten Batterieelemente anliegt. Die Schaltung umfasst ferner mindestens ein Entlademittel zum partiellen Entladen von mindestens einem der zwei benachbarten Batterieelemente, wobei das mindestens eine der Entlademittel dazu ausgelegt ist, das erste der benachbarten Batterieelemente zu entladen, wenn das zweite elektrische Potenzial in positiver Richtung von dem ersten elektrischen Potenzial abweicht und das zweite der benachbarten Batterieelemente zu entladen, wenn das zweite elektrische Potenzial in negativer Richtung von dem ersten Potenzial abweicht. Die Entlademittel und die Vergleichsmittel sind vorzugsweise durch einen gegengekoppelten Operationsverstärker gebildet. JP2010063264 A beschreibt ein weiteres relevantes Beispiel aus dem Stand der Technik.

Bei einem elektrischen Antrieb des Standes der Technik für ein Kraftfahrzeug erfolgt die Symmetrierung der elektrisch in Serie geschalteten Akkumulatorzellen durch parallel geschaltete Regelungsschaltungen. Dabei kann jede Akkumulatorzelle und/oder jedes Akkumulatormodul separat überwacht und symmetriert werden. Als Regelungsschaltungen werden üblicherweise Gleichstrom/Gleichstrom-Wandler verwendet. Derartige Schaltungen sind aufwändig und erzeugen Verluste, was die praktisch zur Verfügung stehende Kapazität reduziert.

Die Erfindung stellt sich zur Aufgabe, eine Akkumulatoranordnung mit einer verbesserten Symmetrierung zu schaffen.

Die Aufgabe der Erfindung wird durch eine Akkumulatoranordnung nach Anspruch 1 und durch einen elektrischen Antrieb für ein Kraftfahrzeug nach Anspruch 12 gelöst. Die abhängigen Ansprüche beanspruchen bevorzugte Ausführungsformen.

Eine erfindungsgemäße Akkumulatoranordnung umfasst eine Mehrzahl in Serie geschalteter Akkumulatorzellen mit je einem ersten und einem zweiten Anschluss und zumindest einen Differenzverstärker mit je einem invertierenden Eingang, einem nicht-invertierenden Eingang und einem Ausgang, an dem eine Differenz zwischen dem Signal am invertierenden Eingang und dem Signal am nicht-invertierenden Eingang anliegt. Der nicht-invertierende Eingang des zumindest einen Differenzverstärkers ist mit dem zweiten Anschluss einer ersten Akkumulatorzelleneinheit der Mehrzahl Akkumulatorzellen und mit dem ersten Anschluss einer zweiten Akkumulatorzelleneinheit der Mehrzahl Akkumulatorzellen gekoppelt. Der invertierende Eingang des zumindest einen Differenzverstärkers ist an den ersten Anschluss der ersten Akkumulatorzelleneinheit der Mehrzahl Akkumulatorzellen über einen ersten Widerstand angeschlossen und an den zweiten Anschluss der zweiten Akkumulatorzelleneinheit der Mehrzahl Akkumulatorzellen über einen zweiten Widerstand angeschlossen. Der Ausgang des zumindest einen Differenzverstärkers ist an den zweiten Anschluss der zweiten Akkumulatorzelleneinheit angeschlossen.

Erfindungsgemäß erfolgt der Abgleich der zu symmetrierenden Akkumulatorzellen in der Serienschaltung dadurch, dass die jeweils benachbarten Akkumulatorzellen oder eine andere Akkumulatorzelle als Referenzspannungsquelle verwendet wird. Dies erlaubt, dass die Akkumulatorzellen und die Symmetrierschaltung, die den zuvor beschriebenen Differenzverstärker umfasst, beliebig kaskadiert werden können.

Der zumindest eine Differenzverstärker kann ein Operationsverstärker sein. Der Aufbau und die Funktionsweise eines Differenzverstärkers oder eine Operationsverstärkers ist dem Fachmann bekannt.

Die erste Akkumulatorzelleneinheit kann eine einzige Akkumulatorzelle aufweisen.

Die zweite Akkumulatorzelleneinheit kann eine Mehrzahl in Serie geschalteter Akkumulatorzellen aufweisen. In diesem Fall wirkt die erste Akkumulatorzelle bzw. Akkumulatorzeleneinheit als Referenzzelle, um die Spannung der zweiten Akkumulatorzelleneinheit anzupassen bzw. zu symmetrieren.

Bei einer anderen Ausführungsform kann die zweite Akkumulatorzelleneinheit eine einzige Akkumulatorzelle aufweisen. Falls die erste Akkumulatorzelleneinheit eine einzige Akkumulatorzelle aufweist und die zweite Akkumulatorzelleneinheit eine einzige Akkumulatorzelle aufweist, wird jede einzelne Akkumulatorzelle mit der jeweils benachbarten Akkumulatorzelle symmetriert. Dadurch kann sich die gesamte Serienschaltung von Akkumulatorzellen symmetrieren. In diesem Fall weisen der erste Widerstand und der zweite Widerstand einen identischen Wert auf.

Bei einer anderen Ausführungsform kann die erste Akkumulatorzelleneinheit und die zweite Akkumulatorzelleneinheit eine identische Anzahl von in Serie geschalteten Akkumulatorzellen aufweisen. Bei dieser Ausführungsform weist der erste Widerstand und der zweite Widerstand einen identischen Wert auf.

Bei noch einer anderen Ausführungsform kann die erste Akkumulatorzelleneinheit eine Anzahl n in Serie geschalteter Akkumulatorzellen umfassen. Die zweite Akkumulatorzelleneinheit kann eine Anzahl m in Serie geschalteter Akkumulatorzellen umfassen. Der Quotient aus dem Wert des ersten Widerstandes und dem Wert des zweiten Widerstandes beträgt n/m.

Der erste Anschluss einer Akkumulatorzelle kann der Anschluss mit dem negativen Potenzial sein und der zweite Anschluss einer Akkumulatorzelle kann der Anschluss mit dem positiven Potenzial sein. Bei dieser Ausführungsform weist der Differenzverstärker aufgrund seiner Beschaltung eine Verstärkung von 2 auf.

Einer anderen Ausführungsform kann der erste Anschluss einer Akkumulatorzelle der Anschluss mit dem positiven Potenzial und der zweite Anschluss einer Akkumulatorzelle der Anschluss mit dem negativen Potenzial sein. Bei dieser Ausführungsform weist der Differenzverstärker aufgrund seiner Beschaltung eine Verstärkung von -1 auf.

Bei einer anderen Ausführungsform kann die Akkumulatoranordnung einen zweiten Differenzverstärker und eine dritte Akkumulatorzelleneinheit aufweisen, die zur zweiten Akkumulatorzelleneinheit in Serie geschaltet ist. Der nicht invertierende Anschluss des zweiten Differenzverstärkers kann an den zweiten Anschluss der zweiten Akkululatorzelleneinheit angeschlossen sein. Der invertierende Anschluss des zweiten Differenzverstärkers kann über einen dritten Widerstand an den ersten Anschluss der zweiten Akkumulatorzelleneinheit und über einen vierten Widerstand an den zweiten Anschluss der dritten Akkumulatorzelleneinheit angeschlossen sein. Der Ausgang des zweiten Differenzverstärkers kann an den zweiten Anschluss der dritten Akkumulatorzelleneinheit angeschlossen sein. Hierdurch wird eine Kaskade von Symmetrierungsschaltungen gebildet, die sicherstellt, dass der gesamte Strang einer Mehrzahl in Serie geschalteter Akkumulatorzellen symmetriert wird.

Bei noch einer anderen Ausführungsform kann die Akkumulatoranordnung einen dritten Differenzverstärker und eine vierte Akkumulatorzelleneinheit aufweisen, die zur zweiten Akkumulatorzelleneinheit in Serie geschaltet ist. Der nicht invertierende Anschluss des vierten Differenzverstärkers kann an den zweiten Anschluss der ersten Akkululatorzelleneinheit angeschlossen sein. Der invertierende Anschluss des dritten Differenzverstärkers kann über einen fünften Widerstand an den ersten Anschluss der ersten Akkumulatorzelleneinheit und über einen sechsten Widerstand an den zweiten Anschluss der vierten Akkumulatorzelleneinheit angeschlossen sein. Der Ausgang des dritten Differenzverstärkers kann an den zweiten Anschluss der vierten Akkumulatorzelleneinheit angeschlossen sein.

Die Erfindung betrifft auch einen elektrischen Antrieb mit einer elektrischen Maschine und einem Umrichter, wobei der Umrichter an der zuvor beschriebenen Akkumulatoranordnung angeschlossen ist. Der Antrieb kann ein Antrieb für ein Fahrzeug sein. Die Grundlagen eines elektrischen Antriebs sind dem Fachmann bekannt und müssen hierin nicht weiter erläutert werden.

Die Erfindung wird nun unter Bezugnahme auf die beigefügten Figuren detaillierter beschrieben, die nicht beschränkende Ausführungsformen der Erfindung zeigen, wobei
Figur 1 eine erste Ausführungsform der Erfindung zeigt;
Figur 2 eine zweite Ausführungsform der Erfindung zeigt;
Figur 3 eine dritte Ausführungsform der Erfindung zeigt;
Figur 4 eine kaskadenförmige Verschaltung der Symmetrierschaltungen zeigt; und
Figur 5 einen Teil eines symmetriereten Strangs zeigt, bei dem eine Akkumulatorzelle als Referenzzelle arbeitet.

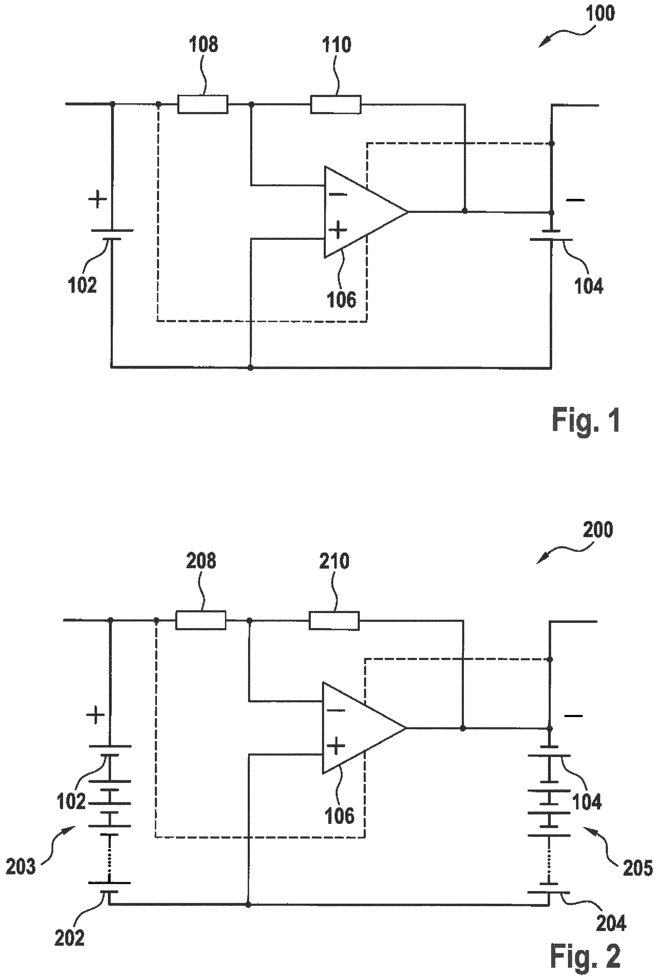

Figur 1 zeigt eine erste Ausführungsform der Erfindung. Eine erste Akkumulatorzelle 102 und eine zweite Akkumulatorzelle 104 sind in Serie geschaltet. Ein Ausgang eines Operationsverstärkers 106 ist an den negativen Pol der zweiten Akkumulatorzelle 102 angeschlossen. Ein nicht-invertierende Eingang des Operationsverstärkers 106 ist an den negativen Pol der ersten Akkumulatorzelle 102 angeschlossen. Ein invertierender Eingang des Operationsverstärkers 106 ist über einen ersten Widerstand 108 mit einem positiven Pol der ersten Akkumulatorzelle 102 gekoppelt. Der invertierende Eingang des Operationsverstärkers 106 ist über einen zweiten Widerstand 110 mit dem Ausgang des Operationsverstärkers 106 bzw. mit dem negativen Pol der zweiten Akkumulatorzelle 104 gekoppelt. Die erste Akkumulatorzelle 202 bildet eine erste Akkumulatorzelleneinheit und die zweite Akkumulatorzelle 204 bildet eine zweite Akkumulatorzelleneinheit.

Bei dieser Ausführungsform weist der Operationsverstärker 106 aufgrund seiner Beschaltung eine Verstärkung von -1 auf. Der Wert des ersten Widerstandes 108 und der Wert des zweiten Widerstandes 110 sind bei dieser Ausführungsform identisch.

Durch den Operationsverstärker 106 und dessen Beschaltung wird erreicht, dass an den Anschlüssen der ersten Akkumulatoranordnung 102 und der zweiten Akkumulatoranordnung 104 das gleiche Potenzial anliegt. Folglich sind die erste Akkumulatorzelle 102 und die zweite Akkumulatorzelle 104 zueinander symmetriert. Wie eingangs erwähnt wurde, wird durch die Symmetrierung erreicht, dass ein höherer Anteil der Ladung in den Akkumulatorzellen 102, 104 für daran angeschlossene Stromverbraucher verfügbar ist.

Figur 2 zeigt eine zweite Ausführungsform der Erfindung. Eine erste Gruppe 203 von Akkumulatorzellen 102, 202 ist mit einer zweiten Gruppe 205 von Akkumulatorzellen 104, 204 in Serie geschaltet. In jeder Gruppe 203, 205 von Akkumulatorzellen ist eine Mehrzahl Akkumulatorzellen in Serie geschaltet. Die erste Gruppe 203 bildet eine erste Akkumulatorzelleneinheit und die zweite Gruppe 205 bildet eine zweite Akkumulatorzelleneinheit.

Ein Ausgang des Operationsverstärkers 106 ist an den negativen Pol der zweiten Akkumulatorzelle 104, die Teil der zweiten Gruppe 205 ist, angeschlossen. Ein nicht-invertierende Eingang des Operationsverstärkers 106 ist an den negativen Pol einer dritten Akkumulatorzelle 202 angeschlossen, die Teil der ersten Gruppe 203 von Akkumulatorzellen ist. Der invertierende Eingang des Operationsverstärkers 106 ist über einen ersten Widerstand 208 mit dem positiven Pol der ersten Akkumulatorzelle 102 gekoppelt. Ferner ist der invertierende Eingang des Operationsverstärkers 106 über einen zweiten Widerstand 210 mit dem Ausgang des Operationsverstärkers 106 und dem negativen Pol der zweiten Akkumulatorzelle 104 gekoppelt, die Teil der zweiten Gruppe 205 ist.

Die erste Gruppe 203 von in Serie geschalteter Akkumulatorzellen 102, 202 kann eine Anzahl n in Serie geschalteter Akkumulatorzellen 102, 202 aufweisen, wobei die erste Akkumulatorzelle 102 die erste Akuumulatorzelle der Serienschalung und die dritte Akkumulatorzelle 202 die letzte Akkumulatorzelle der Serienschaltung (ersten Gruppe) 203 ist. n ist eine natürliche Zahl (ohne null). Die zweite Gruppe 205 von in Serie geschalteter Akkumulatorzellen 104, 204 kann eine Anzahl von m in Serie geschalteter Akkumulatorzellen 104, 204 aufweisen, wobei die zweite Akkumulatorzelle 104 die erste Akuumulatorzelle der Serienschalung und eine vierte Akkumulatorzelle 204 die letzte Akkumulatorzelle der Serienschaltung (zweiten Gruppe) 205 ist. m ist eine natürliche Zahl (ohne null). Der Quotient aus dem ersten Widerstand 208 und dem zweiten Widerstand 210 ist n/m. Folglich arbeitet der Operationsverstärker 106 aufgrund seiner Beschaltung als Spannungsverstärker bzw. Spannungsumsetzer. Der Operationsverstärker 106 gleicht die Spannung der ersten Serienschaltung 203 aus Akkumulatorzellen 102, 202 mit der Spannung der zweiten Serienschaltung 205 der Akkumulatorzellen 104, 204 zueinander ab.

Wenn beide Gruppen 203, 205 die gleiche Spannung aufweisen, weisen der erste Widerstand 208 und der zweite Widerstand 210 den gleichen Wert auf. In allen anderen Fällen wird der Quotient aus dem ersten Widerstand 208 und dem zweiten Widerstand 210 gemäß Spannungsverhältnis der Spannungen der Gruppen 203, 205, beispielsweise aufgrund der Anzahl von Akkumulatorzellen, gewählt. Eine Gruppe kann beispielsweise ein Modul von Akkumulatorzellen sein.

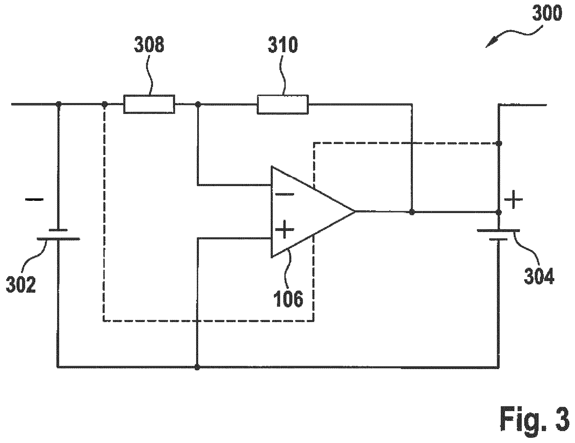

Es wird auf Figur 3 Bezug genommen, die eine dritte Ausführungsform der Erfindung zeigt. Diese Ausführungsform ist im Wesentlichen komplementär zur ersten Ausführungsform. Eine erste Akkumulatorzelle 302 und eine zweite Akkumulatorzelle 304 sind in Serie geschaltet. Ein Ausgang eines Operationsverstärkers 106 ist mit dem positiven Pol der zweiten Akkumulatorzelle 304 gekoppelt. Ein nicht-invertierende Eingang des Operationsverstärkers 106 ist mit dem positiven Pol der ersten Akkumulatorzelle 202 verbunden. Ein invertierender Eingang des Operationsverstärkers 106 ist über einen ersten Widerstand 308 mit dem negativen Pol der ersten Akkumulatorzelle 302 gekoppelt. Der negative Pol des Operationsverstärkers 106 ist über einen zweiten Widerstand 310 mit dem Ausgang des Operationsverstärkers 106 und mit dem positiven Pol der Akkumulatorzelle 304 verbunden.

Bei der dritten Ausführungsform arbeitet der Operationsverstärker 106 aufgrund seiner Beschaltung als Spannungsverstärker mit dem Verstärkungsfaktor 2.

Es versteht sich, dass auch bei dieser Ausführungsform die erste Akkumulatorzelle 302 und/oder die zweite Akkumulatorzelle 304 durch eine Serienschaltung einer Mehrzahl Akkumulatorzellen ersetzt werden können, wie unter Bezugnahme auf die Ausführungsform von Figur 2 beschrieben wurde.

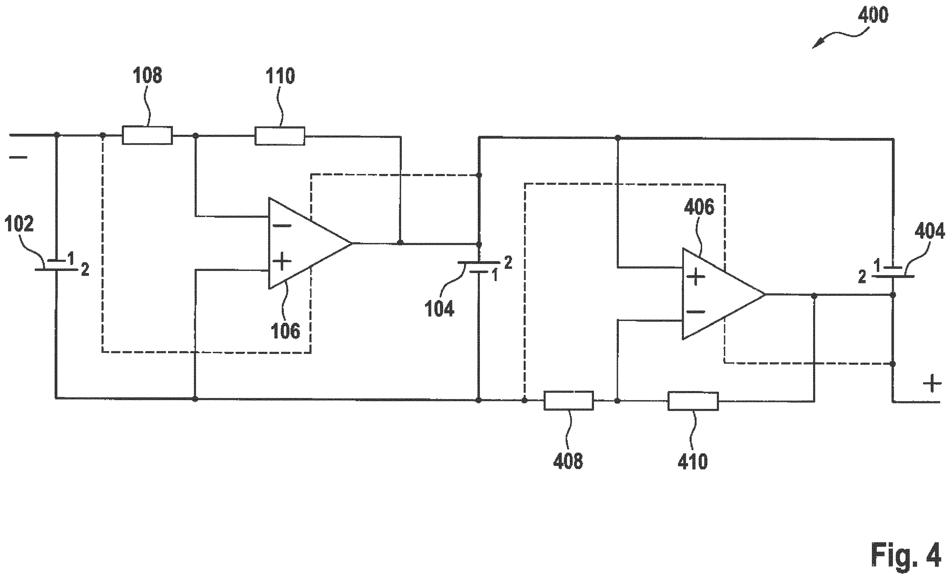

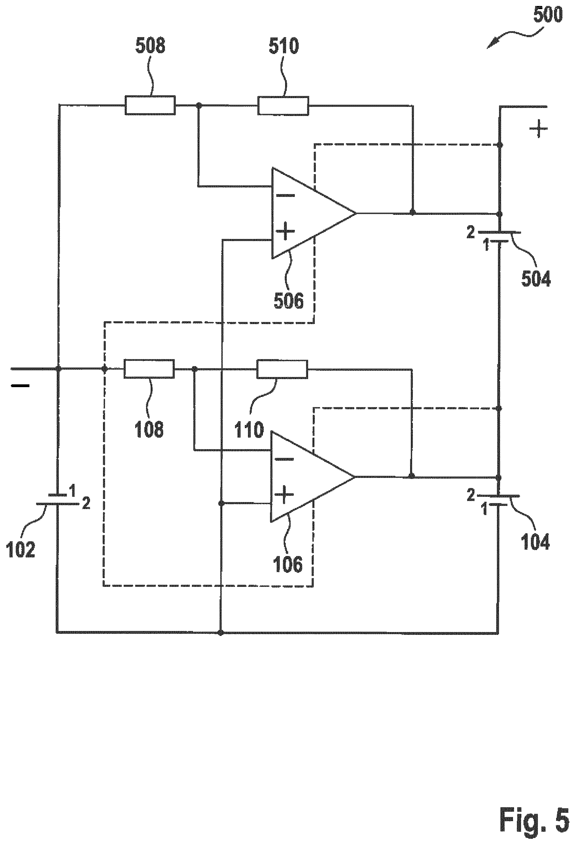

Ferner kann sich ein Strang von in Serie geschalteter Akkumulatorzellen und/oder Akkumulatorzellengruppen bzw. Akkumulatorzelleneinheiten vollständig symmetrieren, wenn alle Akkumulatorzellen des Stranges so geschaltet sind, wie unter Bezugnahme auf Figuren 4 und 5 detaillierter beschrieben wird, die Abwandlungen der vorangegangenen Ausführungsform zeigen, wobei im Sinne der Prägnanz lediglich die Unterschiede zu den vorangegangenen Ausführungsformen beschrieben werden.

Figur 4 zeigt eine Ausführungsform der Akkumulatoranordnung 400 mit einem zweiten Differenzverstärker 406 und einer dritte Akkumulatorzelle 404, die zur zweiten Akkumulatorzelle 104 in Serie geschaltet ist. Der nicht-invertierende Anschluss des dritten Differenzverstärkers 406 ist an den zweiten Anschluss der zweiten Akkumulatorzelle 104 angeschlossen. Der invertierende Anschluss des zweiten Differenzverstärkers 406 ist über einen dritten Widerstand 408 an den ersten Anschluss der zweiten Akkumulatorzelle 104 und über einen vierten Widerstand 410 an den zweiten Anschluss der dritten Akkumulatorzelle 404 angeschlossen. Der Ausgang des zweiten Differenzverstärkers 406 ist an den zweiten Anschluss der dritten Akkumulatorzelle 404 angeschlossen. Bei dieser Ausführungsform erfolgt die Symmetrierung der Spannung der Akkumulatorzellen im Sinne einer Kaskade. Es versteht sich, dass bei dieser Ausführungsform jede Akkumulatorzelle durch eine Akkumulatorzelleneinheit mit einer Mehrzahl Akkumulatorzellen ersetzt werden kann und die Werte der Widerstände entsprechend der Spannung der Akkumulatorzelleneinheiten angepasst werden können.

Figur 5 zeigt eine weitere Ausführungsform einer Akkumulatoranordnung 500 mit einem dritten Differenzverstärker 506 und einer vierten Akkumulatorzelleneinheit 504, die zur zweiten Akkumulatorzelle 104 in Serie geschaltet ist. Der nicht-invertierende Anschluss des dritten Differenzverstärkers 506 ist an den zweiten Anschluss der ersten Akkumulatorzelleneinheit 102 angeschlossen. Der invertierende Anschluss des dritten Differenzverstärkers 506 ist über einen fünften Widerstand 508 an den ersten Anschluss der ersten Akkumulatorzelleneinheit 102 und über einen sechsten Widerstand 510 an den zweiten Anschluss der vierte Akkumulatorzelleneinheit 504 angeschlossen. Der Ausgang des dritten Differenzverstärkers 506 ist an den zweiten Anschluss der vierten Akkumulatorzelleneinheit 504 angeschlossen. Bei dieser Ausführungsform wirkt die erste Akkumulatorzelle 102 als Referenzzelle, zu deren Spannung die Spannung der anderen Akkumulatorzellen 105, 504 symmetriert werden. Es versteht sich, dass auch bei dieser Ausführungsform jede Akkumulatorzelle durch eine Akkumulatorzelleneinheit mit einer Mehrzahl Akkumulatorzellen ersetzt werden kann und die Werte der Widerstände entsprechend der Spannung der Akkumulatorzelleneinheiten angepasst werden können.

Die Ausführungsformen gemäß Figuren 4 und 5 wurden so beschrieben, dass der erste Anschluss einer Akkumulatorzelle der negative Pol ist und der zweite Anschluss der positive Pol ist. Wie in Figur 1 gezeigt ist, kann der erste Anschluss einer Akkumulatorzelle der positive Pol ist und der zweite Anschluss der negative Pol sein.

Bei allen Ausführungsformen sind die Differenzverstärker so gezeigt, dass deren Versorgungsspannung mittels der gestrichelten Linien zugeführt wird. Derartige Differenzverstäker bzw. Operationsverstärken könne sogenannte Rail-to-Rail-Operationsverstärker sein, die selbst bei Eingangssignalen, die die Höhe der Versorgungsspanung aufweisen, als Operationsverstärker arbeiten können. Es versteht sich, dass eine beliebige andere Spannung als Versorgungsspannung für die Operationsverstärker verwendet werden kann, solange sie höher als die Spannung an dem invertrierenden Eingang und/oder nicht-invertrierenden Eingang ist.

Die vorliegende Erfindung hat den Vorteil, dass Akkumulatorzellen einer Serienschaltung einer Mehrzahl Akkumulatorzellen mit einfachen Mitteln symmetriert werden können, um die praktisch verfügbare Kapazität der Akkumulatoranordnung zu erhöhen.

## Patentansprüche

1. Akkumulatoranordnung (100; 200; 300; 400; 500), aufweisend
- eine Mehrzahl in Serie geschalteter Akkumulatorzellen (102, 104; 202, 204; 302, 304; 404; 504) mit je einem ersten und einem zweiten Anschluss;
- zumindest einen Differenzverstärker (106; 406; 506) mit je einem invertierenden Eingang, einen nicht-invertierenden Eingang und einem Ausgang, an dem eine verstärkte Differenz zwischen dem Signal am invertierenden Eingang und dem Signal am nicht-invertierenden Eingang anliegt;
- wobei der nicht-invertierende Eingang des zumindest einen Differenzverstärkers (106; 406; 506) mit dem zweiten Anschluss einer ersten Akkumulatorzelleneinheit (102; 203) der Mehrzahl Akkumulatorzellen und mit dem ersten Anschluss einer zweiten Akkumulatorzelleneinheit (104; 205) der Mehrzahl Akkumulatorzellen direkt galvanisch gekoppelt ist;
- wobei der invertierende Eingang des zumindest einen Differenzverstärkers (106; 406; 506) an den ersten Anschluss der ersten Akkumulatorzelleneinheit (102; 203) der Mehrzahl Akkumulatorzellen über einen ersten Widerstand (108; 208; 308) direkt angeschlossen ist und an den zweiten Anschluss der zweiten Akkumulatorzelleneinheit der Mehrzahl Akkumulatorzellen über einen zweiten Widerstand (110; 210; 310) direkt angeschlossen ist; und
- wobei der Ausgang des zumindest einen Differenzverstärkers (106; 406; 506) an den zweiten Anschluss der zweiten Akkumulatorzelleneinheit (104; 205) direkt angeschlossen ist.

2. Akkumulatoranordnung (100; 200; 300; 400; 500), nach Anspruch 1, **dadurch gekennzeichnet, dass** der zumindest eine Differenzverstärker (106; 406; 506) ein Operationsverstärker ist.

3. Akkumulatoranordnung (100; 300) nach Anspruch 1 oder 2, **dadurch gekennzeichnet, dass** die erste Akkumulatorzelleneinheit eine Akkumulatorzelle (102; 302) aufweist.

4. Akkumulatoranordnung (100; 300) nach einem der Ansprüche 1 bis 3, **dadurch gekennzeichnet, dass** die zweite Akkumulatorzelleneinheit eine Akkumulatorzelle (104; 304) aufweist.

5. Akkumulatoranordnung (100; 300) nach einem der Ansprüche 1 bis 4, **dadurch gekennzeichnet, dass** die erste Akkumulatorzelleneinheit eine Akkumulatorzelle (102; 302) aufweist und die zweite Akkumulatorzelleneinheit eine Akkumulatorzelleneinheit (104; 304) aufweist, wobei der erste Widerstand (108; 308) und der zweite Widerstand (110; 310) einen identischen Wert aufweisen.

6. Akkumulatoranordnung (200) nach einem der Ansprüche 1 bis 5, **dadurch gekennzeichnet, dass** die erste Akkumulatorzelleneinheit (203) und die zweite Akkumulatorzelleneinheit (205) eine identische Anzahl von in Serie geschalteten Akkumulatorzellen aufweisen, wobei der erste Widerstand (208) und der zweite Widerstand (210) einen identischen Wert aufweisen.

7. Akkumulatoranordnung (100; 200; 300; 400; 500) nach einem der Ansprüche 1 bis 5, **dadurch gekennzeichnet, dass** die erste Akkumulatorzelleneinheit (203) eine Anzahl n in Serie geschalteter Akkumulatorzellen umfasst und die zweiten Akkumulatorzelleneinheit (205) eine Anzahl m in Serie geschaltete Akkumulatorzellen umfasst, wobei der Quotient aus dem Wert des ersten Widerstandes (208) und dem Wert des zweiten Widerstandes (210) n/m beträgt.

8. Akkumulatoranordnung (100; 200; 300; 400; 500) nach einem der Ansprüche 1 bis 7, **dadurch gekennzeichnet, dass** der erste Anschluss einer Akkumulatorzelle (102, 104; 202, 204; 302, 304; 404; 504) der Anschluss mit dem negativen Potential ist und der zweite Anschluss einer Akkumulatorzelle (102, 104; 202, 204; 302, 304; 404; 504) der Anschluss mit dem positiven Potential ist.

9. Akkumulatoranordnung (100; 200; 300; 400; 500) nach einem der Ansprüche 1 bis 7, **dadurch gekennzeichnet, dass** der erste Anschluss einer Akkumulatorzelle (102, 104; 202, 204; 302, 304; 404; 504) der Anschluss mit dem positiven Potential ist und der zweite Anschluss einer Akkumulatorzelle (102, 104; 202, 204; 302, 304; 404; 504) der Anschluss mit dem negativen Potential ist.

10. Akkumulatoranordnung (400) nach einem der Ansprüche 1 bis 9, **gekennzeichnet durch** einen zweiten Differenzverstärker (406) und eine dritte Akkumulatorzelleneinheit (404), die zur zweiten Akkumulatorzelleneinheit (104) in Serie geschaltet ist, wobei der nicht-invertierende Anschluss des zweiten Differenzverstärkers (406) an den zweiten Anschluss der zweiten Akkumulatorzelleneinheit (104) und der invertierende Anschluss des zweiten Differenzverstärkers (406) über einen dritten Widerstand (408) an den ersten Anschluss der zweiten Akkumulatorzelleneinheit (104) und über einen vierten Widerstand (410) an den zweiten Anschluss der dritten Akkumulatorzelleneinheit (404) angeschlossen ist und der Ausgang des zweiten Differenzverstärkers (406) an den zweiten Anschluss der dritten Akkumulatorzelleneinheit (404) angeschlossen ist.Akkumulatoranordnung (500) nach einem der Ansprüche 1 bis 9, **gekennzeichnet durch** einen zweiten Differenzverstärker (506) und eine dritte Akkumulatorzelleneinheit (504), die zur zweiten Akkumulatorzelleneinheit (104) in Serie geschaltet ist, wobei der nicht-invertierende Anschluss des zweiten Differenzverstärkers (506) an den zweiten Anschluss der ersten Akkumulatorzelleneinheit (102)

11. und der invertierende Anschluss des zweiten Differenzverstärkers (506) über einen dritten Widerstand (508) an den ersten Anschluss der ersten Akkumulatorzelleneinheit (102) und über einen vierten Widerstand (510) an den zweiten Anschluss der dritten Akkumulatorzelleneinheit (504) angeschlossen ist und der Ausgang des zweiten Differenzverstärkers (506) an den zweiten Anschluss der dritten Akkumulatorzelleneinheit (504) angeschlossen ist.

12. Elektrischer Antrieb, mit einer elektrischen Maschine und einem Umrichter, wobei der Umrichter an der Akkumulatoranordnung nach einem der Ansprüche 1 bis 11 angeschlossen ist.

## Claims

1. Accumulator arrangement (100; 200; 300; 400; 500), comprising
- a plurality of series-connected accumulator cells (102, 104; 202, 204; 302, 304; 404; 504) each having a first and a second terminal;
- at least one differential amplifier (106; 406; 506) each having an inverting input, a non-inverting input and an output at which an amplified difference between the signal at the inverting input and the signal at the non-inverting input is present;
- wherein the non-inverting input of the at least one differential amplifier (106; 406; 506) is directly galvanically coupled to the second terminal of a first accumulator cell unit (102; 203) of the plurality of accumulator cells and to the first terminal of a second accumulator cell unit (104; 205) of the plurality of accumulator cells;
- wherein the inverting input of the at least one differential amplifier (106; 406; 506) is directly connected to the first terminal of the first accumulator cell unit (102; 203) of the plurality of accumulator cells via a first resistor (108; 208; 308) and is directly connected to the second terminal of the second accumulator cell unit of the plurality of accumulator cells via a second resistor (110; 210; 310); and
- wherein the output of the at least one differential amplifier (106; 406; 506) is directly connected to the second terminal of the second accumulator cell unit (104; 205).

2. Accumulator arrangement (100; 200; 300; 400; 500) according to claim 1, **characterized in that** the at least one differential amplifier (106; 406; 506) is an operational amplifier.

3. Accumulator arrangement (100; 300) according to claim 1 or 2, **characterized in that** the first accumulator cell unit comprises an accumulator cell (102; 302).

4. Accumulator arrangement (100; 300) according to any one of claims 1 to 3, **characterized in that** the second accumulator cell unit comprises an accumulator cell (104; 304).

5. Accumulator arrangement (100; 300) according to any one of claims 1 to 4, **characterized in that** the first accumulator cell unit comprises an accumulator cell (102; 302) and the second accumulator cell unit comprises an accumulator cell unit (104; 304), wherein the first resistor (108; 308) and the second resistor (110; 310) have an identical value.

6. Accumulator arrangement (200) according to any one of claims 1 to 5, **characterized in that** the first accumulator cell unit (203) and the second accumulator cell unit (205) comprise an identical number of series-connected accumulator cells, wherein the first resistor (208) and the second resistor (210) have an identical value.

7. Accumulator arrangement (100; 200; 300; 400; 500) according to any one of claims 1 to 5, **characterized in that** the first accumulator cell unit (203) comprises a number n of series-connected accumulator cells and the second accumulator cell unit (205) comprises a number m of series-connected accumulator cells, wherein the quotient of the value of the first resistor (208) and the value of the second resistor (210) is n/m.

8. Accumulator arrangement (100; 200; 300; 400; 500) according to any one of claims 1 to 7, **characterized in that** the first terminal of an accumulator cell (102, 104; 202, 204; 302, 304; 404; 504) is the terminal with the negative potential and the second terminal of an accumulator cell (102, 104; 202, 204; 302, 304; 404; 504) is the terminal with the positive potential.

9. Accumulator arrangement (100; 200; 300; 400; 500) according to any one of claims 1 to 7, **characterized in that** the first terminal of an accumulator cell (102, 104; 202, 204; 302, 304; 404; 504) is the terminal with the positive potential and the second terminal of an accumulator cell (102, 104; 202, 204; 302, 304; 404; 504) is the terminal with the negative potential.

10. Accumulator arrangement (400) according to any one of claims 1 to 9, **characterized by** a second differential amplifier (406) and a third accumulator cell unit (404) which is connected in series to the second accumulator cell unit (104), wherein the non-inverting terminal of the second differential amplifier (406) is connected to the second terminal of the second accumulator cell unit (104) and the inverting terminal of the second differential amplifier (406) is connected via a third resistor (408) to the first terminal of the second accumulator cell unit (104) and via a fourth resistor (410) to the second terminal of the third accumulator cell unit (404) and the output of the second differential amplifier (406) is connected to the second terminal of the third accumulator cell unit (404).

11. Accumulator arrangement (500) according to any one of claims 1 to 9, **characterized by** a second differential amplifier (506) and a third accumulator cell unit (504) which is connected in series to the second accumulator cell unit (104), wherein the non-inverting terminal of the second differential amplifier (506) is connected to the second terminal of the first accumulator cell unit (102) and the inverting terminal of the second differential amplifier (506) is connected via a third resistor (508) to the first terminal of the first accumulator cell unit (102) and via a fourth resistor (510) to the second terminal of the third accumulator cell unit (504) and the output of the second differential amplifier (506) is connected to the second terminal of the third accumulator cell unit (504).

12. Electric drive, with an electric machine and an inverter, wherein the inverter is connected to the accumulator arrangement according to any one of claims 1 to 11.

## Revendications

1. Agencement d'accumulateurs (100 ; 200 ; 300 ; 400 ; 500), comprenant
- une pluralité de cellules d'accumulateurs (102, 104 ; 202, 204 ; 302, 304 ; 404 ; 504) connectées en série ayant chacune une première et une seconde borne ;
- au moins un amplificateur différentiel (106 ; 406 ; 506) ayant chacun une entrée inverseuse, une entrée non inverseuse et une sortie à laquelle est présente une différence amplifiée entre le signal à l'entrée inverseuse et le signal à l'entrée non inverseuse ;
- dans lequel l'entrée non inverseuse du au moins un amplificateur différentiel (106 ; 406 ; 506) est couplée galvaniquement directement à la seconde borne d'une première unité de cellules d'accumulateurs (102 ; 203) de la pluralité de cellules d'accumulateurs et à la première borne d'une seconde unité de cellules d'accumulateurs (104 ; 205) de la pluralité de cellules d'accumulateurs ;
- dans lequel l'entrée inverseuse du au moins un amplificateur différentiel (106 ; 406 ; 506) est connectée directement à la première borne de la première unité de cellules d'accumulateurs (102 ; 203) de la pluralité de cellules d'accumulateurs par l'intermédiaire d'une première résistance (108 ; 208 ; 308) et est connectée directement à la seconde borne de la seconde unité de cellules d'accumulateurs de la pluralité de cellules d'accumulateurs par l'intermédiaire d'une seconde résistance (110 ; 210 ; 310) ; et
- dans lequel la sortie du au moins un amplificateur différentiel (106 ; 406 ; 506) est connectée directement à la seconde borne de la seconde unité de cellules d'accumulateurs (104 ; 205).

2. Agencement d'accumulateurs (100 ; 200 ; 300 ; 400 ; 500) selon la revendication 1, **caractérisé en ce que** le au moins un amplificateur différentiel (106 ; 406 ; 506) est un amplificateur opérationnel.

3. Agencement d'accumulateurs (100 ; 300) selon la revendication 1 ou 2, **caractérisé en ce que** la première unité de cellules d'accumulateurs comprend une cellule d'accumulateur (102 ; 302).

4. Agencement d'accumulateurs (100 ; 300) selon l'une quelconque des revendications 1 à 3, **caractérisé en ce que** la seconde unité de cellules d'accumulateurs comprend une cellule d'accumulateur (104 ; 304).

5. Agencement d'accumulateurs (100 ; 300) selon l'une quelconque des revendications 1 à 4, **caractérisé en ce que** la première unité de cellules d'accumulateurs comprend une cellule d'accumulateur (102 ; 302) et la seconde unité de cellules d'accumulateurs comprend une unité de cellules d'accumulateurs (104 ; 304), dans lequel la première résistance (108 ; 308) et la seconde résistance (110 ; 310) ont une valeur identique.

6. Agencement d'accumulateurs (200) selon l'une quelconque des revendications 1 à 5, **caractérisé en ce que** la première unité de cellules d'accumulateurs (203) et la seconde unité de cellules d'accumulateurs (205) comprennent un nombre identique de cellules d'accumulateurs connectées en série, dans lequel la première résistance (208) et la seconde résistance (210) ont une valeur identique.

7. Agencement d'accumulateurs (100 ; 200 ; 300 ; 400 ; 500) selon l'une quelconque des revendications 1 à 5, **caractérisé en ce que** la première unité de cellules d'accumulateurs (203) comprend un nombre n de cellules d'accumulateurs connectées en série et la seconde unité de cellules d'accumulateurs (205) comprend un nombre m de cellules d'accumulateurs connectées en série, dans lequel le quotient de la valeur de la première résistance (208) et de la valeur de la seconde résistance (210) est n/m.

8. Agencement d'accumulateurs (100 ; 200 ; 300 ; 400 ; 500) selon l'une quelconque des revendications 1 à 7, **caractérisé en ce que** la première borne d'une cellule d'accumulateur (102, 104 ; 202, 204 ; 302, 304 ; 404 ; 504) est la borne avec le potentiel négatif et la seconde borne d'une cellule d'accumulateur (102, 104 ; 202, 204 ; 302, 304 ; 404 ; 504) est la borne avec le potentiel positif.

9. Agencement d'accumulateurs (100 ; 200 ; 300 ; 400 ; 500) selon l'une quelconque des revendications 1 à 7, **caractérisé en ce que** la première borne d'une cellule d'accumulateur (102, 104 ; 202, 204 ; 302, 304 ; 404 ; 504) est la borne avec le potentiel positif et la seconde borne d'une cellule d'accumulateur (102, 104 ; 202, 204 ; 302, 304 ; 404 ; 504) est la borne avec le potentiel négatif.

10. Agencement d'accumulateurs (400) selon l'une quelconque des revendications 1 à 9, **caractérisé par** un second amplificateur différentiel (406) et une troisième unité de cellules d'accumulateurs (404) qui est connectée en série à la seconde unité de cellules d'accumulateurs (104), dans lequel la borne non inverseuse du second amplificateur différentiel (406) est connectée à la seconde borne de la seconde unité de cellules d'accumulateurs (104) et la borne inverseuse du second amplificateur différentiel (406) est connectée par l'intermédiaire d'une troisième résistance (408) à la première borne de la seconde unité de cellules d'accumulateurs (104) et par l'intermédiaire d'une quatrième résistance (410) à la seconde borne de la troisième unité de cellules d'accumulateurs (404) et la sortie du second amplificateur différentiel (406) est connectée à la seconde borne de la troisième unité de cellules d'accumulateurs (404).

11. Agencement d'accumulateurs (500) selon l'une quelconque des revendications 1 à 9, **caractérisé par** un second amplificateur différentiel (506) et une troisième unité de cellules d'accumulateurs (504) qui est connectée en série à la seconde unité de cellules d'accumulateurs (104), dans lequel la borne non inverseuse du second amplificateur différentiel (506) est connectée à la seconde borne de la première unité de cellules d'accumulateurs (102) et la borne inverseuse du second amplificateur différentiel (506) est connectée par l'intermédiaire d'une troisième résistance (508) à la première borne de la première unité de cellules d'accumulateurs (102) et par l'intermédiaire d'une quatrième résistance (510) à la seconde borne de la troisième unité de cellules d'accumulateurs (504) et la sortie du second amplificateur différentiel (506) est connectée à la seconde borne de la troisième unité de cellules d'accumulateurs (504).

12. Entraînement électrique, avec une machine électrique et un onduleur, dans lequel l'onduleur est connecté à l'agencement d'accumulateurs selon l'une quelconque des revendications 1 à 11.
